(19) Europäisches Patentamt
European Patent Office
Office européen des brevets

(11) **EP 1 494 041 B1**

(12) **FASCICULE DE BREVET EUROPEEN**

(45) Date de publication et mention
de la délivrance du brevet:
**11.11.2009 Bulletin 2009/46**

(51) Int Cl.:
***G01S 1/04*** *(2006.01)*

(21) Numéro de dépôt: **04102976.0**

(22) Date de dépôt: **25.06.2004**

(54) **Procédé de réjection d'interférences perturbant la réception d'un signal radio-satellitaire**

Störungsunterdrückungsverfahren beim Empfang eines Satelliten-Funksignals

Method of rejecting interference disturbing the reception of a satellite radio signal

(84) Etats contractants désignés:
**DE FR GB**

(30) Priorité: **01.07.2003 FR 0307979**

(43) Date de publication de la demande:
**05.01.2005 Bulletin 2005/01**

(73) Titulaire: **Thales**
**92200 Neuilly Sur Seine (FR)**

(72) Inventeurs:
• **RENARD, Alain**
**94117, ARCUEIL Cedex (FR)**
• **MONROCQ, Stéphane**
**94117, ARCUEIL Cedex (FR)**

(74) Mandataire: **Beylot, Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2002 122 473**

• **GANZ M W ET AL: "CONVERGENCE OF THE SMI AND THE DIAGONALLY LOADED SMI ALGORITHMS WITH WEAK INTERFERENCE" IEEE TRANSACTIONS ON ANTENNAS AND PROPAGATION, IEEE INC. NEW YORK, US, vol. 38, no. 3, 1 mars 1990 (1990-03-01), pages 394-399, XP000126901 ISSN: 0018-926X**
• **LI J ET AL: "On robust Capon beamforming and diagonal loading" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 5 OF 6, 6 avril 2003 (2003-04-06), pages 337-340, XP002271667 ISBN: 0-7803-7663-3**

**Description**

L'invention concerne un procédé de réjection d'interférences perturbant la réception d'un signal issu d'un système de transmission.

Le domaine de l'invention est celui de la réjection d'interférences perturbant la réception de signaux de transmission, notamment des signaux de type GPS (Global Positionning System).

Dans le cas d'interférences provenant d'une direction donnée, une solution consiste à disposer d'un réseau de capteurs et à pondérer les différentes voies des capteurs de manière à rejeter partiellement ou en totalité le signal perturbateur provenant de cette direction. Il s'agit alors d'une pondération spatiale.

Il existe actuellement différents algorithmes adaptatifs de calcul des poids à attribuer aux différentes voies pour diminuer l'impact des interférences par exemple comme décrit dans GANZ M W ET AL: "Convergence of the SMI and the Diagonally Loaded SMI Algorithms with Weak Interference", IEEE Transactions on Antennas and Propagation, vol. 38, no. 3, 1 mars 1990, pages 394-399; généralement on effectue une réjection.

On connaît les algorithmes itératifs tels que les algorithmes d'Appelbaum, du gradient stochastique, des moindres carrés, ..., basés sur une minimisation de l'erreur quadratique moyenne ou sur la maximisation du rapport signal à bruit.

Une autre solution consiste à appliquer l'algorithme d'inversion de puissance aussi appelé algorithme de Capon basé sur la minimisation de puissance en sortie du réseau de capteurs. Cet algorithme peut être aussi bien utilisé en instantané (« snapshot » en anglais) que dans une implémentation itérative. On va décrire les principales étapes de l'algorithme de Capon en instantané.

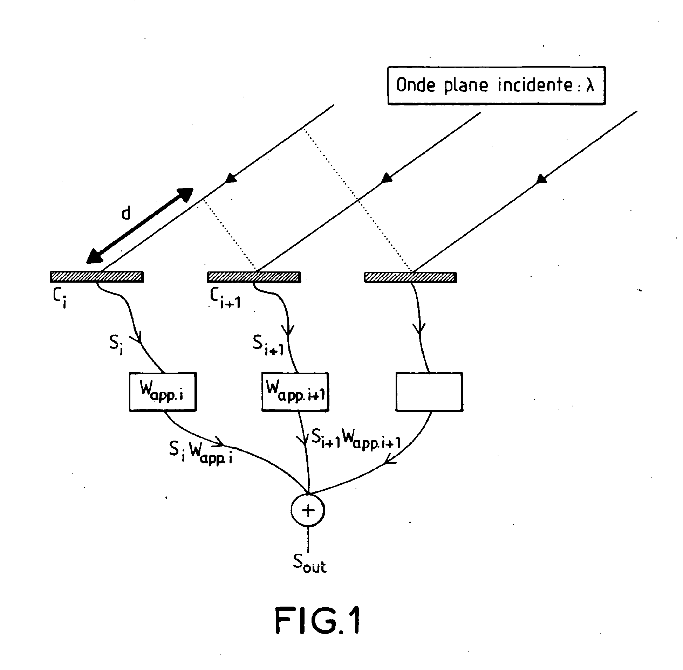

On a schématiquement représenté figure 1 un réseau de capteurs Ci recevant un signal perturbateur modélisé par une onde plane incidente de longueur d'onde $\lambda$.

En sortie du réseau de K capteurs le signal $S_{out}$ est de la forme :

$$S_{out}(t) = W_{app1}S_1 + W_{app2}S_2 + \ldots,$$

soit

$$S_{out}(t) = \sum_{i=1}^{K}(W_{app_i}.S_i(t))$$

$W_{appi}$ étant le gain (ou pondération) $W_i$ appliqué au capteur $C_i$ et $S_i$ étant le signal temporel provenant du capteur $C_i$.

La puissance de sortie P du type $E[|S_{out}.S^*_{out}|]$, E étant l'espérance intégrée sur un temps long (tendant vers l'infini) s'exprime sous la forme :

$$P = W_{app}^{H}. R_{SS}. W_{app},$$

Avec $W_{app} = (W_{app1}, W_{app2}, \ldots W_{appK})$, $W_{app}^H$ représentant l'hermitien (c'est-à-dire le transposé conjugué) du vecteur pondération $W_{app}$, et $R_{ss}$ étant la matrice de corrélation entre les signaux $S_i$ des différents capteurs.

$$R_{SS} = \begin{bmatrix} r_{11} & r_{21} & \cdots & r_{K1} \\ r_{12} & r_{22} & \cdots & \\ \cdots & \cdots & & \\ r_{1K} & \cdots & & r_{KK} \end{bmatrix}$$

avec

$$r_{ik}(t) = S_i(t).S_k^H(t)$$

Une solution triviale permettant de minimiser la puissance P est : $W_{app} = 0$. Pour éviter cette solution triviale, on impose aux coefficients de pondération une contrainte C. Par exemple, une contrainte possible est telle que : $W_{app}.C = 1$

La solution sous la contrainte C est donnée par :

$$W_{cal} = \frac{R_{ss}^{-1}C}{C^H R_{ss}^{-1} C}$$

et on a : $W_{app} = W_{cal}^*$

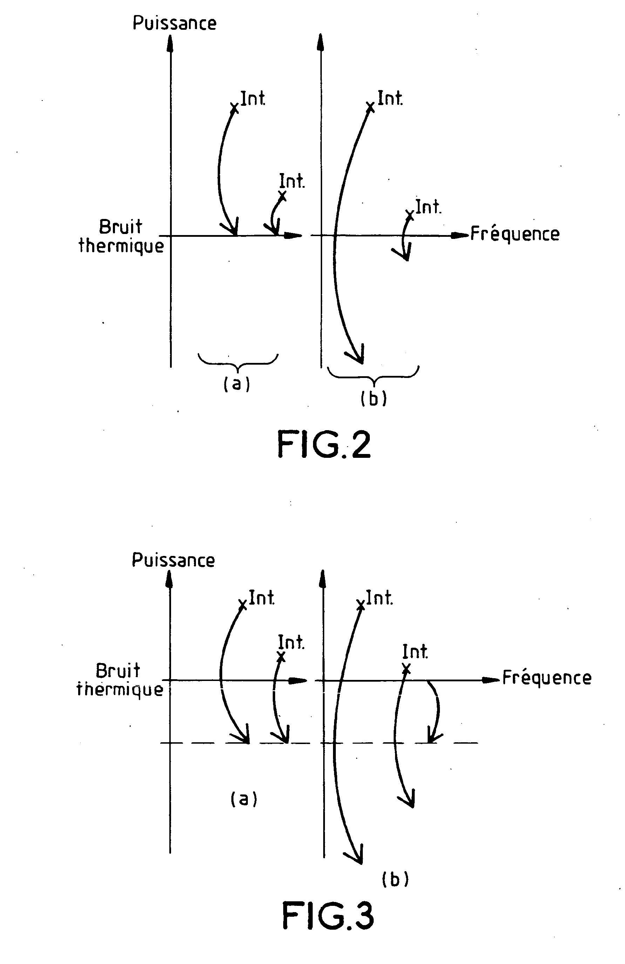

Les réjections obtenues par les différents algorithmes sont illustrées figure 2 : les algorithmes itératifs ont pour résultat d'abaisser le niveau de l'interférence « Int » quasiment au niveau du bruit thermique (cas a de la figure 2) et l'algorithme de Capon abaisse le niveau de l'interférence sous le niveau du bruit thermique à une valeur symétrique de celle de départ (cas b de la figure 2). La limite de sensibilité de ces algorithmes est fixée par rapport au bruit thermique.

Ces algorithmes présentent alors des difficultés de réjection pour des interférences dont la puissance est faible, mais déjà suffisante pour dégrader les performances des récepteurs.

Un but important de l'invention est donc de proposer un procédé permettant de rejeter les interférences notamment de faible puissance, perturbant la réception d'un signal de transmission.

Pour atteindre ce but, l'invention propose un procédé de réjection d'interférences perturbant la réception au moyen d'un système de réception, d'un signal issu d'un système de transmission, le procédé comportant un calcul de pondération des signaux $S_i(t)$ i variant de 1 à K, issus du système de réception, basé sur la matrice $R_{ss}$ de corrélation des signaux $S_i(t)$ entre eux, la matrice $R_{ss}$ comprenant sur sa diagonale les termes d'autocorrélation des signaux $S_i(t)$. Le procédé est principalement caractérisé en ce que le calcul de pondération comporte une étape consistant à modifier les termes d'autocorrélation de la diagonale de la matrice $R_{ss}$.

La puissance du bruit n'intervenant que sur les termes d'autocorrélation (si on intègre sur un temps infini), c'est-à-dire sur la diagonale de la matrice, on peut en modifiant ces termes contrôler la sensibilité des algorithmes de réjection (qui dépend du bruit) et/ou adapter le niveau de réjection des interférences à l'application voulue.

Selon une caractéristique de l'invention, la modification des termes de la diagonale comporte une étape pour rendre les termes de la diagonale égaux à une constante, par exemple égale à 1.

On obtient ainsi la même contribution de la puissance du bruit sur les différentes voies i.

K peut être le nombre de capteurs du système de réception et $S_i(t)$ le signal temporel issu du capteur i. Selon une caractéristique de l'invention, $S_i(t)$ peut en outre être lui-même déterminé en fonction de M intervalles temporels, chaque capteur étant échantillonné dans le temps.

Le système de réception peut ne comporter qu'un capteur échantillonné dans le temps : K est le nombre d'intervalles de temps et $S_i(t)$ le signal temporel issu du capteur et correspondant à l'intervalle i.

L'invention concerne également un récepteur d'un signal issu d'un système de transmission, susceptible d'être perturbé par des interférences, comportant au moins un capteur et relié à ce (ou chaque) capteur, un dispositif comportant au moins un élément apte à pondérer le signal issu du capteur correspondant et, relié à l'(aux) élément(s) de pondération, un processeur apte à mettre en oeuvre le procédé décrit.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un réseau de capteurs recevant un signal perturbateur modélisé par une onde plane incidente et de signal de sortie $S_{out}$,

la figure 2 déjà décrite illustre schématiquement les réjections obtenues par les algorithmes itératifs (cas a) et par l'algorithme de Capon (cas b),

la figure 3 illustre schématiquement les réjections obtenues par les algorithmes itératifs (cas a) et par l'algorithme de Capon (cas b) à partir du procédé selon l'invention,

la figure 4 représente schématiquement un récepteur selon l'invention en cas de réjection spatiale,

la figure 5 représente schématiquement un récepteur selon l'invention en cas de réjection temporelle,

la figure 6 représente schématiquement un récepteur selon l'invention en cas de réjection spatio-temporelle.

On va tout d'abord décrire l'invention sur la base de l'algorithme de Capon instantané et en considérant que le signal de transmission est un signal radio-satellitaire.

En négligeant le signal radio-satellitaire très faible et en supposant unitaire le gain des différentes voies I (gain du capteur i inclus), le signal $S_i(t)$ s'exprime sous la forme :

$$S_i(t) = A_i e^{-j(\varpi t + \varphi + \frac{d_i}{\lambda})} + b_i(t)$$

avec : $\omega$ la fréquence du signal perturbateur

$\varphi$ sa phase
$\lambda$ sa longueur d'onde
$A_i$, l'amplitude du signal perturbateur vu sur le capteur i
$d_i$ la différence de marche entre le capteur i et le capteur k
bi(t) le bruit thermique reçu sur le capteur i.

Par conséquent, on peut écrire l'intercorrélation du signal entre le capteur i et le capteur k :

$$r_{ik}(t) = S_i(t).S_k^H(t) = A_i A_k e^{j\frac{d_k - d_i}{\lambda}} + b_i(t).A_k e^{j(\varpi t + \varphi + \frac{d_k}{\lambda})} + b_k^H(t).A_i e^{-j(\varpi t + \varphi + \frac{d_i}{\lambda})} + b_i(t).b_k^H(t)$$

L'autocorrélation sur le capteur i s'exprime donc sous la forme :

$$r_{ii}(t) = S_i(t).S_i^H(t) = A_i^2 + b_i(t).A_i e^{j(\omega t + \varphi + \frac{d_i}{\lambda})} + b_i^H(t).A_i e^{-j(\omega t + \varphi + \frac{d_i}{\lambda})} + \|b(t)\|^2$$

L'espérance E des $r_{ik}$ s'écrit alors :

$$E[r_{ik}] = A_i A_k e^{j\frac{d_k - d_i}{\lambda}} + E[b_i b_k^H] = A_i A_k e^{j\frac{d_k - d_i}{\lambda}} + E[b_i]E[b_k^H] = A_i A_j e^{j\frac{d_k - d_i}{\lambda}}$$

$$E[r_{ii}] = A_i^2 + E[b_i^2] = A_i^2 + P_{i\text{-bruit}}$$

car les bruits sont blancs, indépendants et de moyenne nulle. La puissance du bruit n'intervient que sur les termes d'autocorrélation, c'est-à-dire sur la diagonale de la matrice $R_{ss}$.

En intégrant sur un temps long qui tend vers l'infini, la matrice $R_{ss}$ s'écrit alors sous la forme :

$$R_{SS_{t \to \infty}} = \begin{bmatrix} A_1^2 + P_{1\text{-bruit}} & A_1 A_2 C_{21} & ... & A_1 A_K C_{K1} \\ A_2 A_1 C_{12} & A_2^2 + P_{2\text{-bruit}} & ... & \\ ... & ... & & \\ A_K A_1 C_{1K} & ... & & A_K^2 + P_{K\text{-bruit}} \end{bmatrix}$$

avec

$$C_{ik} = e^{j\frac{d_k - d_i}{\lambda}}$$

Jusqu'à présent on a supposé unitaire le gain sur chaque voie. En réalité chaque voie i présente un certain gain $G_i$ et $r_{ii}$ s'écrit :

$$r_{ii} = G_i^2(A_i^2 + P_{i\text{-bruit}})$$

La puissance du bruit n'intervient donc pas équitablement sur chaque voie. Pour obtenir la même contribution de la puissance du bruit sur les différentes voies, on peut normaliser la matrice de la façon suivante.

On pose $r_{ii} = g_i^2$

On peut calculer tous les $g_i$, i=1 à K

$$r_{ik}^{\text{normalisé}} = \frac{r_{ik}^{\text{avant}}}{g_i.g_k}$$

La matrice $R_{SS}$ normalisée s'écrit alors :

$$R_{SS}^{\text{normalisée}} = \begin{bmatrix} 1 & r_{21}^{\text{normalisé}} & \cdots & r_{K1}^{\text{normalisé}} \\ r_{12}^{\text{normalisé}} & 1 & \cdots & \\ \cdots & \cdots & & \\ r_{1K}^{\text{normalisé}} & \cdots & & 1 \end{bmatrix}$$

On peut multiplier cette matrice par $A_1^2 + P_{1\text{-bruit}}$ pour faciliter l'étape suivante de mise en forme de la matrice. On obtient alors :

$$R_{SS}^{\text{normalisée}} = (A_1^2 + P_{1\text{-bruit}}) \begin{bmatrix} 1 & r_{21}^{\text{normalisé}} & \cdots & r_{K1}^{\text{normalisé}} \\ r_{12}^{\text{normalisé}} & 1 & \cdots & \\ \cdots & \cdots & & \\ r_{1K}^{\text{normalisé}} & \cdots & & 1 \end{bmatrix}$$

Les termes de la diagonale de la matrice sont maintenant normalisés (c'est-à-dire égaux entre eux) à 1 ou à $A_1^2 + P_{1\text{-bruit}}$ : la puissance du bruit a ainsi la même contribution sur les différentes voies.

La normalisation est une étape de mise en forme de la matrice qui, appliquée à un algorithme de pondération permet d'améliorer les performances de réjection ; cependant, la mise en forme présentée dans le paragraphe suivant peut être effectuée sans normalisation.

Pour adapter la réjection à l'application souhaitée, on modifie les termes d'autocorrélation, par exemple par la soustraction d'une matrice diagonale.

Dans le cas de la matrice de corrélation non normalisée, on obtient alors :

$$R_{SS_{t \to \infty}} = \begin{bmatrix} A_1^2 + P_{1\text{-bruit}} & A_1 A_2 C_{21} & \cdots & A_1 A_K C_{K1} \\ A_2 A_1 C_{12} & A_2^2 + P_{2\text{-bruit}} & \cdots & \\ \cdots & \cdots & & \\ A_K A_1 C_{1K} & \cdots & & A_K^2 + P_{K\text{-bruit}} \end{bmatrix} - \begin{bmatrix} P_1 & 0 & \cdots & 0 \\ 0 & P_2 & & \\ \cdots & & & \\ 0 & \cdots & 0 & P_K \end{bmatrix}$$

Dans le cas de la matrice de corrélation normalisée à 1, on obtient alors :

$$R_{ss}^{finale} = R = \begin{bmatrix} 1 & r_{21}^{normalisé} & ... & r_{K1}^{normalisé} \\ r_{12}^{normalisé} & 1 & ... & \\ ... & ... & & \\ r_{1K}^{normalisé} & ... & & 1 \end{bmatrix} - P \begin{bmatrix} 1 & 0 & ... & 0 \\ 0 & 1 & & \\ ... & & & \\ 0 & ... & 0 & 1 \end{bmatrix}$$

avec P<1.

Pour 0<P<1, cela revient à diminuer la puissance de bruit qui apparaît dans les termes d'autocorrélation : la réjection sera donc meilleure. Lorsqu'on retire ainsi une partie du bruit il faut s'assurer que la réjection ne dépasse pas un seuil au-delà duquel les signaux GPS seraient également rejetés et ne dépasse pas non plus un seuil au-delà duquel $R_{ss}$ n'est plus réversible.

Pour P<0, on augmente artificiellement la puissance du bruit (c'est-à-dire qu'on introduit un bruit fictif), ce qui stabilise la matrice et donc la réjection.

P peut être déterminé selon plusieurs méthodes, par exemple en fonction de la puissance estimée du bruit.

On peut également souhaiter diminuer la réjection dans le cas par exemple où l'on ne dispose pas d'un temps d'intégration assez long : on augmente alors le niveau de la diagonale par exemple par une addition.

On peut aussi modifier la réjection en fonction de critères autres que la puissance estimée du bruit ou que le temps d'intégration. On peut par exemple la modifier en fonction de la puissance du signal GPS reçu.

On peut également modifier la réjection en fonction de critères déterminés au début du traitement de pondération et restant inchangés pendant ce traitement ; selon une variante de l'invention, les critères peuvent aussi être déterminés adaptativement pendant le traitement.

On peut aussi modifier les termes d'autocorrélation de la matrice normalisée ou non par une multiplication de ces termes par un vecteur.

Une fois la matrice mise en forme, on applique alors l'algorithme de Capon et on obtient pour le vecteur pondération $W_{cal}$ :

$$W_{cal} = \frac{R_{ss}^{finale-1} C}{C^H R_{ss}^{finale-1} C}$$

Les réjections ainsi obtenues sont illustrées figure 3 (cas b).

On a montré un exemple d'application à l'algorithme de Capon du procédé selon l'invention.

Le procédé selon l'invention s'applique également aux algorithmes itératifs. Ceux-ci comportent une étape de calcul de la corrélation des signaux entre les voies, une étape de calcul de la pondération à appliquer au moyen de l'algorithme choisi et une étape d'application de la pondération aux différentes voies pour la réjection des interférences. Le poids affecté à chaque voie est mis à jour en tenant compte du jeu de poids précédents et à chaque itération, la réjection de l'interférence augmente puis se stabilise. Pour ces algorithmes aussi, le calcul de la pondération est basé sur la corrélation des signaux entre eux, par exemple sous la forme d'une matrice. De même que le procédé selon l'invention s'applique à l'algorithme de Capon par une mise en forme de la matrice de corrélation, de même il s'applique aux algorithmes itératifs par une modification des éléments de corrélation en diminuant (ou augmentant) la valeur des termes d'autocorrélation.

Les réjections ainsi obtenues sont illustrées figure 3 (cas a).

On a considéré jusqu'à présent une pondération spatiale des signaux issus d'un réseau de capteurs.

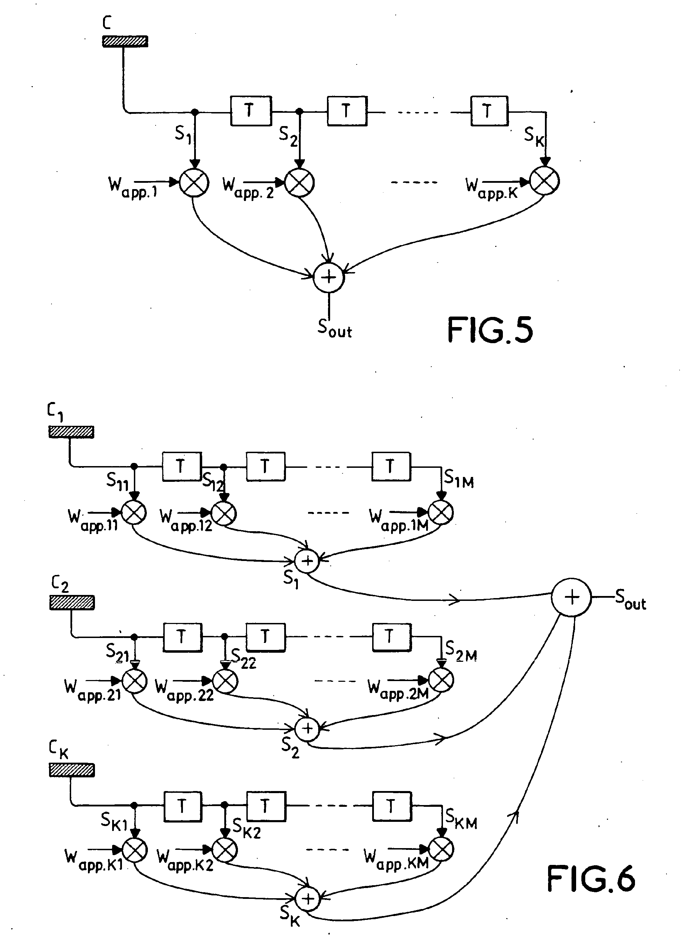

Le procédé selon l'invention s'applique également à une pondération temporelle des signaux issus d'un capteur échantillonné dans le temps. Les K signaux temporels $S_1,..., S_i, ..., S_K$ proviennent du même capteur C et correspondent à K différents intervalles de temps T comme illustré figure 5. Les intervalles de temps sont aussi désignés par décalages temporels. La suite du traitement est alors identique à celui présenté pour le traitement spatial, la pondération étant effectuée sur les différents signaux décalés dans le temps par le vecteur $W_{app}$ déterminé comme précédemment par

$$W_{cal} = \frac{R_{ss}^{finale-1}C}{C^H R_{ss}^{finale-1}C} \qquad \text{et} \quad W_{app}=W_{cal}{}^*$$

et le signal final se présente sous la forme :

$$S_{out}(t) = \sum_{i=1}^{K}(W_{app_i}.S_i(t))$$

Plus généralement, le procédé selon l'invention s'applique à une pondération spatio-temporelle de signaux issus d'un réseau de capteurs $C_1$, ..., $C_i$, ...$C_K$, chaque capteur étant échantillonné dans le temps comme illustré figure 6.

Le signal $S_i(t)$ du capteur i s'exprime alors sous la forme :

$$S_i(t) = s_{i1}(t).w_{appi1} + s_{i2}(t).w_{appi2} +...+ s_{ij}(t).w_{appij} + ...+ s_{iM}(t).w_{appiM},$$

$S_{ij}(t)$ étant le signal issu du capteur i et correspondant au décalage temporel j, $w_{ij}$ étant la pondération du capteur i et correspondant au décalage temporel j, M étant le nombre d'intervalles temporels du capteur i. Chaque capteur a le même nombre M de décalages temporels T.

Le signal $S_{out}$ s'exprime alors sous la forme :

$$S_{out}(t) = \sum_{i=1}^{K} \sum_{j=1}^{M}(w_{app_{ij}}.s_{ij}(t))$$

K étant le nombre de capteurs.

La matrice $R_{ss}$ de corrélation entre les signaux de chaque capteur et de chaque décalage temporel s'écrit comme suit :

$$R_{ss} = \begin{bmatrix} r_{11/11} & r_{11/12} & \cdots & r_{11/1M} & r_{11/21} & r_{11/22} & \cdots & r_{11/2M} & \cdots & r_{11/K1} & r_{11/K2} & \cdots & r_{11/KM} \\ r_{12/11} & r_{12/12} & & \vdots & \vdots & \vdots & & \vdots & & \vdots & & & \vdots \\ \vdots & & \ddots & \vdots & \vdots & \vdots & & & & & & & \vdots \\ r_{1M/11} & \cdots & \cdots & r_{1M/1M} & \vdots & \vdots & & & & & & & \vdots \\ r_{21/11} & \cdots & \cdots & \cdots & r_{21/21} & \vdots & & & & & & & \vdots \\ r_{22/11} & \cdots & \cdots & \cdots & \cdots & r_{22/22} & & & & & & & \vdots \\ \vdots & & & & & & \ddots & & & \vdots & & & \vdots \\ r_{2M/11} & & & & & & & r_{2M/2M} & & \vdots & & & \vdots \\ \vdots & & & & & & & & \ddots & \vdots & & & \vdots \\ r_{K1/11} & \cdots & \cdots & \cdots & \cdots & \cdots & \cdots & \cdots & \cdots & r_{K1/Ki} & & & \vdots \\ r_{K2/11} & & & & & & & & & & r_{K2/K2} & & \vdots \\ \vdots & & & & & & & & & & & \ddots & \vdots \\ r_{KM/11} & \cdots & \cdots & \cdots & \cdots & \cdots & \cdots & \cdots & \cdots & \cdots & \cdots & \cdots & r_{KM/KM} \end{bmatrix}$$

avec $r_{ij/np}(t) = s_{ij}(t).s$

$$r_{ij/np}(t) = s_{ij}(t).s_{np}^{H}(t),$$

$(t)$ ,

i et n correspondant respectivement aux capteurs i ou n et variant de 1 à K, j et p correspondant respectivement aux décalages temporels j ou p et variant de 1 à M.

Les termes de corrélation sont formés du produit des signaux de chaque capteur et de chaque décalage temporel, soit pour K capteurs et M décalages temporels, un total de $(KM)^2$ termes.

Dans ce cas également les termes d'autocorrélation sont modifiés en fonction de l'application souhaitée.

Le signal de transmission peut être un signal radio-satellitaire comme par exemple un signal GPS, un signal GALILEO ou un signal provenant de tout autre système de positionnement par satellites. Le signal de transmission peut être issu de tout système de transmission radio-électrique ou autre, optique par exemple.

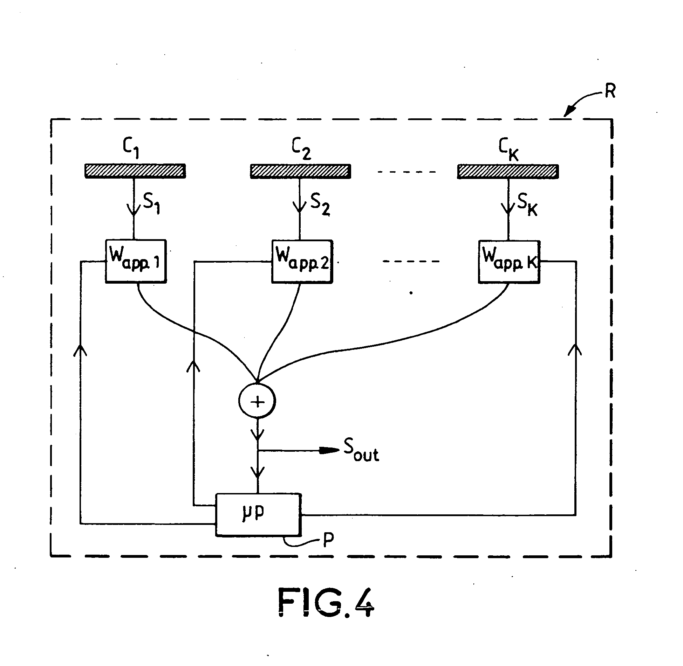

L'invention concerne également un récepteur R apte à mettre en oeuvre le procédé décrit. On a représenté figure 4 un récepteur R dans le cas d'une réjection spatiale. Il comprend K capteur $C_1$, ... $C_K$ et relié à chaque capteur $C_i$, un dispositif comportant au moins un élément $W_{appi}$ apte à pondérer le signal $S_i(t)$ issu du capteur $C_i$ correspondant et, relié à aux élément(s) $W_{appi}$ de pondération, un processeur P apte à mettre en oeuvre le procédé décrit.

## Revendications

1. Procédé de réjection d'interférences perturbant la réception au moyen d'un système de réception, d'un signal issu d'un système de transmission, le procédé comportant un calcul de pondération des signaux $S_i(t)$, i variant de 1 à K, issus du système de réception, basé sur la matrice $R_{ss}$ de corrélation des signaux $S_i(t)$ entre eux, la matrice $R_{ss}$ comprenant sur sa diagonale les termes d'autocorrélation des signaux $S_i(t)$, le calcul de pondération comportant une étape consistant à modifier les termes d'autocorrélation de la diagonale dé la matrice $R_{ss}$ , **caractérisé en ce que** la modification des termes de la diagonale comporte une étape de normalisation de ces termes qui consiste à rendre les termes de la diagonale de $R_{ss}$ égaux à une constante.

2. Procédé selon la revendication précédente, **caractérisé en ce que** la constante égale 1.

3. Procédé selon l'une des revendications précédentes, **caractérisé en ce que** la modification comporte une étape de soustraction de la matrice $R_{ss}$ par une matrice diagonale prédéterminée ou une étape de multiplication de la matrice $R_{ss}$ par un vecteur prédéterminé.

4. Procédé selon l'une des revendications précédentes, **caractérisé en ce que** le signal étant en outre perturbé par du bruit thermique, les termes d'autocorrélation de la diagonale de la matrice $R_{ss}$ sont modifiés en fonction de la puissance estimée du bruit thermique.

5. Procédé selon l'une des revendications précédentes, **caractérisé en ce que** la matrice de corrélation étant calculée sur un temps d'intégration déterminé, les termes d'autocorrélation de la diagonale de la matrice $R_{ss}$ sont modifiés en fonction de ce temps d'intégration.

6. Procédé selon l'une des revendications précédentes, **caractérisé en ce que** le signal reçu du système de transmission présentant une puissance déterminée, les termes d'autocorrélation de la diagonale de la matrice $R_{ss}$ sont modifiés en fonction de la puissance de ce signal.

7. Procédé selon l'une des revendications précédentes, **caractérisé en ce que** la modification est adaptative.

8. Procédé selon l'une des revendications précédentes, **caractérisé en ce que** le système de réception comprenant un capteur échantillonné dans le temps, K est le nombre d'intervalles de temps et $S_i(t)$ le signal temporel issu du capteur et correspondant à l'intervalle de temps i.

9. Procédé selon l'une des revendications précédentes 1 à 7, **caractérisé en ce que** le système de réception comprenant K capteurs, $S_i(t)$ est le signal temporel issu du capteur i.

**10.** Procédé selon la revendication précédente, **caractérisé en ce que** chaque capteur i est échantillonné dans le temps, M étant le nombre d'intervalles temporels du capteur i et le signal $S_i(t)$ est de la forme :

$$S_i(t) = s_{i1}(t).w_{appi1} + s_{i2}(t).w_{appi2} + ... + s_{ij}(t).w_{appij} + ... + s_{iM}(t).w_{appiM},$$

$s_{ij}(t)$ étant le signal issu du capteur i et correspondant à un intervalle temporel j, $W_{appij}$ étant la pondération appliquée au capteur i et correspondant à l'intervalle temporel j.

**11.** Procédé selon l'une des revendications précédentes, **caractérisé en ce que** le signal issu du système de transmission est un signal radio-satellitaire ou radio-électrique ou optique.

**12.** Procédé selon l'une des revendications précédentes, **caractérisé en ce que** la matrice modifiée est utilisée dans des applications de traitement des interférences basé sur la minimisation de la puissance des interférences.

**13.** Procédé selon la revendication précédente, **caractérisé en ce que** le traitement est basé sur un algorithme de type Capon ou de type itératif.

**14.** Récepteur (R) d'un signal issu d'un système de transmission et susceptible d'être perturbé par des interférences, comportant au moins un capteur (C) et relié à ce (ou chaque) capteur (C), un dispositif comportant au moins un élément apte à pondérer le signal issu du capteur correspondant et, relié à l'(aux) élément(s) de pondération, un processeur (P) apte à mettre en oeuvre le procédé selon l'une quelconque des revendications précédentes.

**15.** Récepteur (R) selon la revendication précédente, **caractérisé en ce qu'**il comporte K capteurs ($C_1$, ...$C_i$, ... $C_K$).

**16.** Récepteur (R) selon l'une des revendications 14 ou 15, **caractérisé en ce qu'**il comporte pour chaque capteur, M éléments (T) de décalages temporels.

**Claims**

**1.** Method of rejecting interference disturbing the reception by means of a reception system, of a signal emanating from a transmission system, the method comprising a calculation for weighting the signals $S_i(t)$, i varying from 1 to K, emanating from the reception system, based on the intercorrelation matrix $R_{SS}$ for the signals $S_i(t)$, the matrix $R_{SS}$ comprising on its diagonal the autocorrelation terms of the signals $S_i(t)$, the weighting calculation comprising a step consisting in modifying the autocorrelation terms of the diagonal of the matrix $R_{SS}$, **characterized in that** the modification of the terms of the diagonal comprises a step of normalizing these terms which consists in rendering the terms of the diagonal of $R_{SS}$ equal to a constant.

**2.** Method according to the preceding claim, **characterized in that** the constant equals 1.

**3.** Method according to one of the preceding claims, **characterized in that** the modification comprises a step of subtraction of a predetermined diagonal matrix from the matrix $R_{SS}$ or a step of multiplication of the matrix $R_{SS}$ by a predetermined vector.

**4.** Method according to one of the preceding claims, **characterized in that** the signal furthermore being disturbed by thermal noise, the autocorrelation terms of the diagonal of the matrix $R_{SS}$ are modified as a function of the estimated power of the thermal noise.

**5.** Method according to one of the preceding claims, **characterized in that** the correlation matrix being calculated over a determined integration time, the autocorrelation terms of the diagonal of the matrix $R_{SS}$ are modified as a function of this integration time.

**6.** Method according to one of the preceding claims, **characterized in that** the signal received from the transmission system exhibiting a determined power, the autocorrelation terms of the diagonal of the matrix $R_{SS}$ are modified as a function of the power of this signal.

**7.** Method according to one of the preceding claims, **characterized in that** the modification is adaptive.

**8.** Method according to one of the preceding claims, **characterized in that** the reception system comprising a sensor sampled over time, K is the number of time intervals and $S_i(t)$ the time signal emanating from the sensor and corresponding to time interval i.

**9.** Method according to one of Claims 1 to 7, **characterized in that** the reception system comprising K sensors, $S_i(t)$ is the time signal emanating from sensor i.

**10.** Method according to the preceding claim, **characterized in that** each sensor i is sampled over time, M being the number of time intervals of the sensor i and the signal $S_i(t)$ is of the form:

$$S_i(t) = s_{i1}(t).w_{appi1} + s_{i2}(t).w_{appi2} + \ldots + s_{ij}(t).w_{appij}$$
$$+ \ldots + s_{iM}(t).w_{appiM},$$

$S_{ij}(t)$ being the signal emanating from sensor i and corresponding to a time interval j, $w_{appij}$ being the weighting applied to sensor i and corresponding to time interval j.

**11.** Method according to one of the preceding claims, **characterized in that** the signal emanating from the transmission system is a satellite radio or RF or optical signal.

**12.** Method according to one of the preceding claims, **characterized in that** the modified matrix is used in applications of interference processing based on minimization of the power of the interference.

**13.** Method according to the preceding claim, **characterized in that** the processing is based on an algorithm of Capon type or of iterative type.

**14.** Receiver (R) of a signal emanating from a transmission system and apt to be disturbed by interference, comprising at least one sensor (C) and linked to this (or each) sensor (C), a device comprising at least one element able to weight the signal emanating from the corresponding sensor and, linked to the weighting element(s), a processor (P) able to implement the method according to any one of the preceding claims.

**15.** Receiver (R) according to the preceding claim, which comprises K sensors ($C_1$, ... $C_i$, ... $C_K$).

**16.** Receiver (R) according to one of Claims 14 or 15, which comprises, for each sensor, M time shift elements (T).

**Patentansprüche**

**1.** Verfahren zur Unterdrückung von Interferenzen, die den Empfang, mittels eines Empfangssystems, eines von einem Übertragungssystem stammenden Signals stören, wobei das Verfahren eine Gewichtungsberechnung der vom Empfangssystem stammenden Signale $S_i(t)$ aufweist, wobei i von 1 bis K variiert, basierend auf der Matrix $R_{SS}$ der Korrelation der Signale $S_i(t)$ untereinander, wobei die Matrix $R_{SS}$ auf ihrer Diagonale die Autokorrelationsterme der Signale $S_i(t)$ enthält, wobei die Gewichtungsberechnung einen Schritt aufweist, der darin besteht, die Autokorrelationsterme der Diagonale der Matrix $R_{SS}$ zu verändern, **dadurch gekennzeichnet, dass** die Änderung der Terme der Diagonale einen Schritt der Normalisierung dieser Terme aufweist, der darin besteht, die Terme der Diagonale von $R_{SS}$ einer Konstanten anzugleichen.

**2.** Verfahren nach dem vorhergehenden Anspruch, **dadurch gekennzeichnet, dass** die Konstante gleich 1 ist.

**3.** Verfahren nach einem der vorhergehenden Ansprüche, **dadurch gekennzeichnet, dass** die Änderung einen Schritt der Subtraktion von der Matrix $R_{SS}$ einer vorbestimmten diagonalen Matrix oder einen Schritt der Multiplikation der Matrix $R_{SS}$ mit einem vorbestimmten Vektor aufweist.

**4.** Verfahren nach einem der vorhergehenden Ansprüche, **dadurch gekennzeichnet, dass**, wenn das Signal außerdem von einem thermischen Rauschen gestört wird, die Autokorrelationsterme der Diagonale der Matrix $R_{SS}$ in Abhängigkeit von der geschätzten Leistung des thermischen Rauschens verändert werden.

**5.** Verfahren nach einem der vorhergehenden Ansprüche, **dadurch gekennzeichnet, dass**, wenn die Korrelationsmatrix über eine bestimmte Integrationszeit berechnet wird, die Autokorrelationsterme der Diagonale der Matrix $R_{SS}$ in Abhängigkeit von dieser Integrationszeit verändert werden.

**6.** Verfahren nach einem der vorhergehenden Ansprüche, **dadurch gekennzeichnet, dass**, wenn das vom Übertragungssystem empfangene Signal eine bestimmte Leistung aufweist, die Autokorrelationsterme der Diagonale der Matrix $R_{SS}$ in Abhängigkeit von der Leistung dieses Signals verändert werden.

**7.** Verfahren nach einem der vorhergehenden Ansprüche, **dadurch gekennzeichnet, dass** die Änderung adaptiv ist.

**8.** Verfahren nach einem der vorhergehenden Ansprüche, **dadurch gekennzeichnet, dass**, wenn das Empfangssystem einen zeitlich abgetasteten Sensor aufweist, K die Anzahl von Zeitintervallen und $S_i(t)$ das Zeitsignal ist, das vom Sensor stammt und dem Zeitintervall i entspricht.

**9.** Verfahren nach einem der Ansprüche 1 bis 7, **dadurch gekennzeichnet, dass**, wenn das Empfangssystem K Sensoren enthält, $S_i(t)$ das vom Sensor i stammende Zeitsignal ist.

**10.** Verfahren nach dem vorhergehenden Anspruch, **dadurch gekennzeichnet, dass** jeder Sensor i zeitlich abgetastet wird, wobei M die Anzahl der Zeitintervalle des Sensors i ist und das Signal $S_i(t)$ die folgende Form hat:

$$S_i(t) = s_{i1}(t) . w_{appi1} + s_{i2}(t) . w_{appi2} + ... + s_{ij}(t) . w_{appij} + ... + s_{iM}(t) . w_{appiM},$$

wobei $S_{ij}(t)$ das Signal ist, das vom Sensor i stammt und einem Zeitintervall j entspricht, wobei $W_{appij}$ die Gewichtung ist, die an den Sensor i angewendet wird und dem Zeitintervall j entspricht.

**11.** Verfahren nach einem der vorhergehenden Ansprüche, **dadurch gekennzeichnet, dass** das vom Übertragungssystem stammende Signal ein Satelliten-Funksignal oder ein Funksignal oder ein optisches Signal ist.

**12.** Verfahren nach einem der vorhergehenden Ansprüche, **dadurch gekennzeichnet, dass** die veränderte Matrix in Anwendungen zur Behandlung der Interferenzen basierend auf der Minimierung der Leistung der Interferenzen verwendet wird.

**13.** Verfahren nach dem vorhergehenden Anspruch, **dadurch gekennzeichnet, dass** die Verarbeitung auf einem Algorithmus vom Typ Capon oder vom iterativen Typ basiert.

**14.** Empfänger (R) eines Signals, das von einem Übertragungssystem stammt und von Interferenzen gestört werden kann, der mindestens einen Sensor (C) und, mit diesem (oder jedem) Sensor (C) verbunden, eine Vorrichtung, die mindestens ein Element aufweist, das das vom entsprechenden Sensor stammende Signal gewichten kann, und, mit dem (den) Gewichtungselementen verbunden, einen Prozessor (P) aufweist, der das Verfahren nach einem der vorhergehenden Ansprüche durchführen kann.

**15.** Empfänger (R) nach dem vorhergehenden Anspruch, **dadurch gekennzeichnet, dass** er K Sensoren ($C_1$, ... $C_i$, ... $C_K$) aufweist.

**16.** Empfänger (R) nach einem der Ansprüche 14 oder 15, **dadurch gekennzeichnet, dass** er für jeden Sensor M Zeitverzögerungselemente (T) aufweist.

Onde plane incidente : λ

$d$

$C_i$

$C_{i+1}$

$S_i$

$S_{i+1}$

$W_{app.i}$

$W_{app.i+1}$

$S_i W_{app.i}$

$S_{i+1} W_{app.i+1}$

$+$

$S_{out}$

FIG.1

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GANZ M W et al.** Convergence of the SMI and the Diagonally Loaded SMI Algorithms with Weak Interference. *IEEE Transactions on Antennas and Propagation,* 01 Mars 1990, vol. 38 (3), 394-399